# FASCICULE DE BREVET EUROPEEN

(11) **EP 1 569 846 B1**
(45) Date de publication et mention de la délivrance du brevet: **04.04.2007**
(21) Numéro de dépôt: 03799709.5
(22) Date de dépôt: 04.12.2003
(51) Int. Cl.: B64C 1/14, B64D 45/00

(54) **PORTE DESTINEE A ETRE INTERPOSEE ENTRE UN COCKPIT ET UNE CABINE D'UN AERONEF**
TÜR ZUR ANORDNUNG ZWISCHEN EINEM COCKPIT UND EINER KABINE EINES FLUGZEUGES
DOOR WHICH IS INTENDED TO BE POSITIONED BETWEEN THE COCKPIT AND THE CABIN OF AN AIRCRAFT

(30) Priorité: 09.12.2002 FR 0215526
(43) Date de publication de la demande: 07.09.2005
(73) Titulaire: AIRBUS France, 31060 Toulouse (FR)
(72) Inventeur: ROQUES, Serge, F-31700 Cornebarrieu (FR); PUJOL, Olivier, F-31700 Beauzelle (FR); PROST, Dominique, F-69004 Lyon (FR); MALLAVAL, Philippe, F-69003 Lyon (FR)
(74) Mandataire: Poulin, Gérard
(86) Numéro de dépôt international: PCT/FR2003/050153
(87) Numéro de publication internationale: WO 2004/054874

(56) Documents cités:
- WO-A-03/029591
- FR-A- 2 478 572
- US-A1- 2003 052 227
- US-B1- 6 484 449
- GUY NORRIS: "Decompression risk is main hurdle in bid to design secure cockpit door" FLIGHT INTERNATIONAL, vol. 160, no. 4802, 16 octobre 2001 (2001-10-16), page 18, XP001100398

## Description

### DOMAINE TECHNIQUE

La présente invention se rapporte à une porte destinée à être interposée entre un cockpit et une cabine d'un aéronef, ainsi qu'à un système de porte composé d'une telle porte et d'un cadre de porte associé.

### ETAT DE LA TECHNIQUE ANTERIEURE

Dans ce domaine technique, on connaît une porte classique séparant le cockpit et la cabine d'un aéronef, cette porte disposant habituellement d'une conception relativement simple et comportant un côté cockpit et un côté cabine, respectivement orientés vers le cockpit et vers la cabine de l'aéronef, lorsque la porte occupe une position de fermeture.

Typiquement, la porte est montée sur un cadre de porte de manière à pouvoir s'ouvrir indifféremment vers le côté cockpit et vers le côté cabine. De cette façon, lorsqu'une dépressurisation se produit dans le cockpit ou dans la cabine de l'aéronef, la porte peut être ouverte respectivement vers le côté cockpit et vers le côté cabine afin de créer une ventilation entre .ces deux compartiments. De plus, notons que cette double possibilité d'ouverture de la porte engendre généralement la présence d'un interstice entre la porte et son cadre de porte associé.

Or pour faire face aux problèmes d'insécurité et de terrorisme à bord des aéronefs, et plus particulièrement dans un soucis de protection du personnel navigant situé dans le cockpit, plusieurs mesures ont été envisagées afin de renforcer le système de porte interposé entre le cockpit et la cabine.

Parmi ces mesures, on compte notamment celle relative à l'élimination de l'interstice existant entre la porte et son cadre de porte associé, dans le but d'éviter que des balles soient tirées depuis la cabine vers le cockpit de l'aéronef, à travers l'interstice. Il est également précisé à titre indicatif que d'autres mesures ont été proposées, telles que celle visant à renforcer la structure de la porte et de son cadre de porte associé afin de rendre ces éléments intégralement résistants aux impacts de balles ainsi qu'à l'intrusion, ou encore celle relative au verrouillage de la porte dans son cadre de porte associé pendant toute la durée du vol de l'aéronef.

A cet égard, il est noté qu'une manière simple de supprimer l'interstice initialement prévu entre la porte et son cadre de porte associé, consiste à concevoir ce dernier de manière à ce qu'il recouvre partiellement l'un des deux côtés de la porte. Dans pareil cas, le côté cabine est préférablement choisi, notamment de façon à ce que les charnières situées entre cette porte et le cadre de porte ne soient pas accessibles depuis la cabine de l'aéronef, toujours pour des raisons de sécurité.

Cependant, dans une telle configuration, le cadre de porte n'autorise l'ouverture de la porte que du seul côté cockpit. Par conséquent, lorsqu'une dépressurisation survient dans la cabine de l'aéronef, la porte ne peut pas s'ouvrir vers le côté cabine, et interdit donc le passage d'un flux d'air entre le cockpit et la cabine, à travers le cadre de porte.

De plus, il est indiqué que même si des surfaces de ventilation (de l'anglais « venting areas ») peuvent être prévues entre le cockpit et la cabine afin d'assurer une ventilation permanente entre ces deux compartiments de l'aéronef, le nombre restreint d'emplacements disponibles dans le cockpit pour accueillir ces surfaces de ventilation ne suffit pas pour assurer une ventilation satisfaisante, répondant aux exigences réglementaires liées aux cas de dépressurisation de la cabine de l'aéronef.

Outre le respect des exigences réglementaires, notons qu'une trop faible ventilation entre ce cockpit et la cabine pourrait facilement conduire à une impossibilité d'ouverture de cette porte et donc à un blocage du personnel navigant à l'intérieur du cockpit, en raison de la différence de pression d'air s'appliquant de chaque côté de la porte. Enfin, il est précisé qu'une différence de pression accrue pourrait également provoquer des dégâts matériels importants, susceptibles de se traduire par une perte de l'aéronef et/ou par des blessures des occupants de cet aéronef.

De l'art antérieur, on connaît également l'article de Guy Norris, "Decompression is main hurdle in bid to design secure cockpit door" paru dans le n° 4802 de Flight International sur lequel se base le preambule de la revendication 1.

### EXPOSÉ DE L'INVENTION

L'invention a donc pour but de proposer une porte destinée à être interposée entre un cockpit et une cabine d'un aéronef, la porte remédiant au moins partiellement aux inconvénients mentionnés ci-dessus relatifs aux réalisations de l'art antérieur.

Plus précisément, le but de l'invention est de présenter une porte dont la conception est compatible avec les mesures citées précédemment visant à renforcer la sécurité du personnel navigant situé dans le cockpit, tout en étant apte à faire face à une dépressurisation survenant à l'intérieur de l'aéronef, et plus spécifiquement à une dépressurisation se produisant dans la cabine de cet aéronef.

Par ailleurs, l'invention a également pour but de proposer un système de porte destiné à être interposé entre un cockpit et une cabine d'un aéronef, le système comportant un cadre de porte ainsi qu'une porte telle que celle répondant aux buts indiqués ci-dessus.

Pour ce faire, l'invention a tout d'abord pour objet celui de la revendication 1 annexée.

Avantageusement, la conception de la porte selon l'invention est adaptée pour faire face à une dépressurisation survenant à l'intérieur de l'aéronef, et plus spécifiquement à une dépressurisation se produisant dans la cabine de cet aéronef, même lorsque cette porte est montée sur un cadre de porte associé de manière à pouvoir s'ouvrir uniquement vers le côté cockpit. En effet, le volet prévu sur la porte est susceptible d'être déverrouillé automatiquement lorsque la différence de pression d'air s'appliquant de chaque côté de la porte est supérieure à une valeur prédéterminée, cette valeur prédéterminée pouvant avantageusement correspondre à une valeur traduisant une dépressurisation significative dans la cabine de l'aéronef.

Une fois déverrouillé, le volet s'ouvre vers le côté cabine de la porte, afin de libérer le passage traversant cette porte, et d'engendrer par conséquent la création d'un flux d'air entre le cockpit et la cabine de l'aéronef.

De cette façon, la porte selon l'invention est en mesure d'assurer une ventilation répondant entièrement aux exigences réglementaires liées aux cas de dépressurisation de la cabine de l'aéronef, tout en étant compatible avec les mesures citées précédemment visant à renforcer la sécurité du personnel navigant situé dans le cockpit, dont principalement celle relative à la suppression de l'interstice entre la porte et son cadre de porte associé, pouvant entraîner une impossibilité d'ouverture de cette porte vers le côté cabine.

Notons à titre indicatif que dans le cas non limitatif où la porte selon l'invention est effectivement destinée à être montée sur un cadre de porte associé de manière à pouvoir s'ouvrir uniquement vers la côté cockpit, les exigences réglementaires relatives aux cas de dépressurisation survenant dans le cockpit de l'aéronef peuvent être facilement satisfaites, en permettant l'ouverture de cette porte vers le côté cockpit.

Ainsi, avec une telle porte selon l'invention, les risques de perte de l'aéronef et/ou de blessure des occupants de cet aéronef sont avantageusement fortement amoindris.

Par ailleurs, comme cela a été indiqué ci-dessus, lorsque la différence de pression d'air s'appliquant de chaque côté de la porte est- supérieure à la valeur prédéterminée, c'est-à-dire lorsque la différence entre la pression régnant à l'intérieur du cockpit et la pression régnant à l'intérieur de la cabine de l'aéronef est supérieure à cette valeur, le volet apte à obturer le passage prévu à travers la porte est automatiquement déverrouillé. A cet égard, on peut préférentiellement prévoir que cette valeur prédéterminée est telle qu'elle est apte à générer sur le volet un force suffisante pour provoquer une ouverture automatique du volet déverrouillé vers le côté cabine. En d'autres termes, le volet déverrouillé peut être ouvert automatiquement sous l'effet d'une force résultant directement de la différence de pression régnant de part et d'autre du volet.

Bien entendu, des solutions alternatives peuvent être envisagées pour réaliser l'ouverture du volet déverrouillé. A ce titre, on peut citer un mécanisme classique à ressort, du type maintenu sous tension lorsque le volet est verrouillé dans une position d'obturation du passage, et apte à libérer son énergie dès que le volet est déverrouillé, afin d'engendrer une ouverture brusque de ce volet vers le côté cabine. D'autre part, il est naturellement possible d'effectuer l'ouverture du volet déverrouillé manuellement, depuis l'intérieur du cockpit de l'aéronef.

De plus le mécanisme de verrouillage/déverrouillage du volet est monté sur le volet de la porte. De cette manière, le volet et son mécanisme de verrouillage/déverrouillage peuvent être réalisés conjointement, indépendamment du reste de la porte, constitué par un corps principal de porte muni du passage traversant.

D'autre part, notons que plusieurs types de mécanismes de verrouillage/déverrouillage peuvent être retenus pour équiper le volet de la porte, à condition qu'ils soient capables de remplir d'une part la fonction de verrouillage du volet, à savoir être capable d'assurer le maintien de ce volet sur la porte à l'aide d'un verrou, et d'autre part la fonction, de déverrouillage automatique de ce volet, lorsque la différence entre la pression d'air s'appliquant contre le côté cockpit et la pression d'air s'appliquant contre le côté cabine est supérieure à la valeur prédéterminée.

Plus précisément, le mécanisme de verrouillage/déverrouillage destiné à être couplé au volet de la porte est du type mécanisme pneumatique, n'intégrant aucun composant nécessitant d'alimentation électrique. En effet, un tel mécanisme pneumatique est conçu de manière à engendrer un déverrouillage automatique du volet sous l'effet d'une simple force générée par la différence de pression d'air s'exerçant de chaque côté de la porte.

Pour ce faire, le mécanisme de verrouillage/déverrouillage du volet comporte :
- un volet secondaire comportant une première et une seconde surfaces, la première surface étant soumise à la pression cockpit,
- une membrane définissant une chambre et étant munie d'une première et d'une seconde extrémités, la première extrémité étant solidaire de la seconde surface du volet secondaire, et la seconde extrémité étant solidaire d'une portion du volet munie d'au moins un orifice traversant, de sorte qu'au moins une partie de la seconde surface du volet secondaire soit soumise à la pression cabine, et
- des moyens de transmission de mouvement raccordés d'une part au volet secondaire susceptible d'être mis en mouvement lorsque la pression cockpit et la pression cabine diffèrent, et d'autre part à au moins un verrou destiné à coopérer avec un cadre de volet prévu sur la porte et définissant le passage.

Avec un tel agencement, en fonction des différentes pressions s'exerçant sur les surfaces opposées du volet secondaire, ce dernier peut effectivement être mis en mouvement et transmettre ce mouvement jusqu'à un ou plusieurs verrous maintenant le volet dans une position verrouillée d'obturation du passage, afin que ce/ces verrous libèrent le cadre de volet et autorisent alors une ouverture du volet.

De façon préférentielle, le volet secondaire comprend une extrémité supérieure et une extrémité inférieure, l'extrémité inférieure étant raccordée de façon articulée sur le volet, et l'extrémité supérieure étant raccordée de façon articulée aux moyens de transmission de mouvement. Dans cette configuration, lorsque la pression cockpit devient supérieure à la pression cabine, le volet secondaire est alors apte à pivoter autour de son extrémité inférieure.

On peut alors prévoir que pour chaque verrou du mécanisme de verrouillage/déverrouillage, les moyens de transmission de mouvement comportent :
- une bielle disposant d'une première et d'une seconde extrémités, la première extrémité étant raccordée de façon articulée à l'extrémité supérieure du volet secondaire, et
- une tige de transmission coulissante disposant d'une première et d'une seconde extrémités, la première extrémité étant raccordée de façon articulée à la seconde extrémité de la bielle, et la seconde extrémité étant raccordée de manière solidaire au verrou. Ainsi, lors d'un mouvement de pivotement du volet secondaire traduisant une différence entre la pression cockpit et la pression cabine, ce mouvement est transformé à l'aide de moyens simples et peu coûteux en un coulissement du verrou du mécanisme de verrouillage/déverrouillage.

A ce titre, notons que pour chaque verrou du mécanisme de verrouillage/déverrouillage, les moyens de transmission de mouvement peuvent également comporter une douille de guidage solidaire du volet de la porte, et à l'intérieur de laquelle la tige de transmission est apte à coulisser.

Préférentiellement, chaque verrou du mécanisme de verrouillage/déverrouillage est solidaire d'un levier susceptible d'être actionné afin de déverrouiller manuellement le volet, un ressort de rappel du verrou étant agencé entre le levier et la douille de guidage des moyens de transmission de mouvement.

La possibilité de déverrouiller puis d'ouvrir aisément et manuellement le volet depuis l'intérieur du cockpit de l'aéronef permet d'effectuer une évacuation du personnel navigant situé dans ce cockpit, par exemple suite à un d'accident ayant entraîné le blocage de la porte dans une position de fermeture. Naturellement, il est précisé que le passage est de dimension suffisante pour autoriser une évacuation du personnel par le passage.

Même si le mécanisme de verrouillage/déverrouillage du volet est agencé du côté cockpit de la porte, donc rendu inaccessible aux occupants de la cabine de l'aéronef, il se peut que des personnes telles que des terroristes, désirant pénétrer illégalement dans le cockpit de l'aéronef, tirent des balles ou projètent une masse sur la porte interposée entre le cockpit et la cabine, notamment sur le volet lui-même. Ces actions susceptibles d'être effectuées depuis la cabine de l'aéronef pourraient conduire à un déverrouillage du volet, par exemple en raison d'un mouvement du volet secondaire se produisant non pas suite à une différence de pression régnant de part et d'autre de la porte, mais suite à une accélération générée par l'impact des balles ou de la masse contre cette porte.

Pour faire face à cette éventualité pouvant avoir pour conséquences de permettre aux terroristes de s'introduire dans le cockpit de l'aéronef, le personnel navigant situé dans ce cockpit dispose de la faculté de maintenir le/les leviers afin de bloquer manuellement le/les verrous associés dans une position verrouillée, et interdire ainsi le déverrouillage et l'ouverture du volet. Par ailleurs, dans un tel cas, une conception appropriée du mécanisme de verrouillage/déverrouillage pourrait également offrir la possibilité au personnel navigant de faire pivoter le/les leviers afin que ceux-ci soient bloqués en translation par rapport au volet, et interdisent par conséquent tout coulissement des verrous auxquels ils sont respectivement rattachés.
- Néanmoins, il est en outre possible d'adjoindre des moyens destinés à diminuer les risques de déverrouillage du volet suite à l'impact de balles ou d'une masse contre la porte, et ne nécessitant pas d'intervention de la part du personnel situé à l'intérieur du cockpit.

A ce titre, pour chaque verrou du mécanisme de verrouillage/déverrouillage, les moyens de transmission de mouvement peuvent comporter des moyens anti-accélération destinés à stopper le mouvement de la tige de transmission lorsque celle-ci est animée d'un mouvement d'une vitesse supérieure à une vitesse prédéterminée, et donc destinés à stopper le mouvement de l'ensemble des éléments du mécanisme de verrouillage/déverrouillage. Bien entendu, ces moyens anti-accélération provoquant le blocage de la tige de transmission sont aisément surpassables lors de l'actionnement manuel du/des leviers depuis l'intérieur du cockpit. De plus, les moyens anti-accélération restent inopérants lorsque la tige de transmission est animée d'un mouvement relativement lent, de vitesse inférieure à la vitesse prédéterminée, tel que celui rencontré lors d'une dépressurisation de la cabine de l'aéronef, ou lors de fortes turbulences en vol.

Par ailleurs, une solution alternative à celle décrite ci-dessus et permettant également de réduire les risques de déverrouillage du volet suite à l'impact de balles ou d'une masse contre la porte, consiste à prévoir que pour chaque verrou du mécanisme de verrouillage/déverrouillage, les moyens de transmission de mouvement comportent également des moyens de butée munis d'une masse inertielle apte à se déplacer automatiquement d'une position de retrait à une position de butée, suite à un choc survenant sur la porte d'intensité supérieure ou égale à une intensité prédéterminée, afin de constituer une butée pour un organe d'arrêt solidaire du verrou.

Ainsi, avec un tel agencement, le blocage de l'organe d'arrêt provoque simultanément le blocage du verrou, de sorte que le volet ne peut être déverrouillé.

A ce titre, il est noté que les moyens de butée restent inopérants lorsque la masse inertielle est soumise à une accélération inférieure à l'accélération provoquée par un choc d'intensité égale à l'intensité prédéterminée, une telle accélération pouvant notamment être rencontrée lors de fortes turbulences en vol.

Toujours dans le même but, on peut aussi prévoir que le mécanisme de verrouillage déverrouillage comporte un système d'équilibrage du volet secondaire, le système d'équilibrage étant conçu afin d'interdire, suite à un choc survenant sur la porte et plus spécifiquement sur le volet de cette porte, tout mouvement du volet secondaire susceptible de provoquer le déverrouillage de ce volet. Naturellement, le dispositif d'équilibrage est conçu de manière à pouvoir équilibrer le moment moteur imprimé par le volet secondaire, sous l'accélération reçue par le choc produit sur la porte.

De façon préférentielle, le mécanisme de verrouillage/déverrouillage est protégé par un capot de protection, monté du côté cockpit sur le volet de la porte et ne s'opposant pas l'équilibre des pressions, ce capot pouvant par exemple prendre la forme d'une grille. Avec un tel agencement, l'ensemble des éléments du mécanisme de verrouillage/déverrouillage- sont protégés des éventuels chocs pouvant survenir lors d'opérations de maintenance, ou lors de l'accès au cockpit du personnel navigant. Bien évidemment, le/les leviers sont agencés de manière à faire saillie de ce capot de protection, afin que le personnel puisse aisément y avoir accès.

En outre, la portion du volet munie d'au moins un orifice traversant est recouverte d'un filtre disposé du côté cabine de la porte et masquant l'emplacement de chaque orifice, le filtre étant maintenu contre le volet par une grille de protection anti-balistique assemblée sur le volet. De cette façon, les personnes situées dans la cabine de l'aéronef ne sont pas en mesure d'apercevoir le/les orifices pratiqués. De plus, notons que le filtre prévu empêche de façon avantageuse que ces orifices ne soient colmatés par des poussières, le colmatage d'un ou plusieurs de ces orifices pouvant avoir pour conséquence d'entraîner un disfonctionnement du mécanisme de verrouillage/déverrouillage du volet.

Par ailleurs, toujours dans un soucis d'accroître la sécurité du personnel navigant situé dans le cockpit de l'aéronef, la grille de protection anti-balistique est assemblée sur le volet à l'aide d'une pluralité de goujons traversant le volet, et uniquement démontables depuis le côté cockpit de la porte.

De préférence, le volet comporte une partie inférieure munie de crochets de pivotement destinés d'une part à maintenir le volet dans une position d'obturation du passage lorsqu'il est verrouillé, et d'autre part à autoriser un pivotement du volet vers le côté cabine lorsqu'il est déverrouillé.

D'autre part, le volet peut comporter une partie supérieure munie de moyens de retenue du volet dans le passage, ces moyens de retenue étant préférentiellement constitués par au moins un poussoir à bille apte à coopérer avec le cadre de volet prévu dans la porte. A cet égard, notons que ces moyens de retenue permettent d'interdire au volet de basculer lorsque le mécanisme de verrouillage/déverrouillage a été actionné par inadvertance, et non pas suite à une différence de pression d'air ayant engendré un déverrouillage automatique du volet. Ainsi, avec l'adjonction de tels moyens, il est alors nécessaire d'appliquer un certain seuil d'effort pour provoquer l'ouverture du volet déverrouillé. Notons que ce seuil d'effort est naturellement déterminé de manière à ce qu'il soit strictement inférieur à tout effort exercé sur le volet et son mécanisme de verrouillage/déverrouillage associé, résultant d'une différence de pression ayant conduit au déverrouillage automatique du volet. De cette façon, même dans le cas où ces moyens de retenue sont installés entre le cadre de volet et le volet, dès que le volet est déverrouillé, ce dernier est automatiquement ouvert vers le côté cabine de l'aéronef.

Comme mentionné ci-dessus, la porte comprend de préférence un corps principal de porte ainsi qu'un volet apte à être monté sur le corps principal de porte afin d'obturer le passage, le volet muni du mécanisme de verrouillage/déverrouillage étant intégralement amovible du corps principal de porte. Avantageusement, les opérations de montage et de démontage du volet muni de son mécanisme de verrouillage/déverrouillage associé peuvent être réalisées rapidement et sans outillage.

Afin de disposer d'une porte encore plus sécurisée pour le personnel navigant, le corps principal de porte et le volet peuvent être réalisés dans un matériau anti-balistique.

La présente invention a également pour objet un système de porte destiné à être interposé entre un cockpit et une cabine d'un aéronef, le système comportant un cadre de porte ainsi qu'une porte disposant d'un côté cockpit et d'un côté cabine, le cadre de porte étant apte à recouvrir partiellement le côté cabine de la porte et autorisant uniquement une ouverture de cette porte vers le côté cockpit. Selon l'invention, la porte est une porte telle que celle également objet de l'invention et décrite ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en perspective d'une partie avant d'un aéronef, munie d'un système de porte interposé entre un cockpit et une cabine, le système comportant une porte selon un mode de réalisation préféré de la présente invention,
- la figure 2 représente, de façon plus détaillée, le système de porte de la partie avant de l'aéronef représentée sur la figure 1, vu depuis le cockpit de l'aéronef,
- la figure 3 représente une vue en coupe prise le long de la ligne III-III de la figure 2, lorsque le volet est verrouillé dans une position d'obturation du passage traversant la porte,
- la figure 4 représente une vue en coupe prise le long de la ligne III-III de la figure 2, lorsque le volet est déverrouillé et qu'il est partiellement ouvert vers le côté cabine de la porte,
- la figure 5 représente une vue partielle en coupe d'une porte selon un autre mode de réalisation préféré de la présente invention, lorsque le volet est verrouillé dans une position d'obturation du passage traversant la porte, et
- la figure 6 représente une vue similaire à celle de la figure 5, lorsque le volet est verrouillé dans une position d'obturation du passage traversant la porte et qu'un choc survient sur cette porte.

### EXPOSÉ DÉTAILLÉ D'UN MODE DE RÉALISATION PRÉFÉRÉ

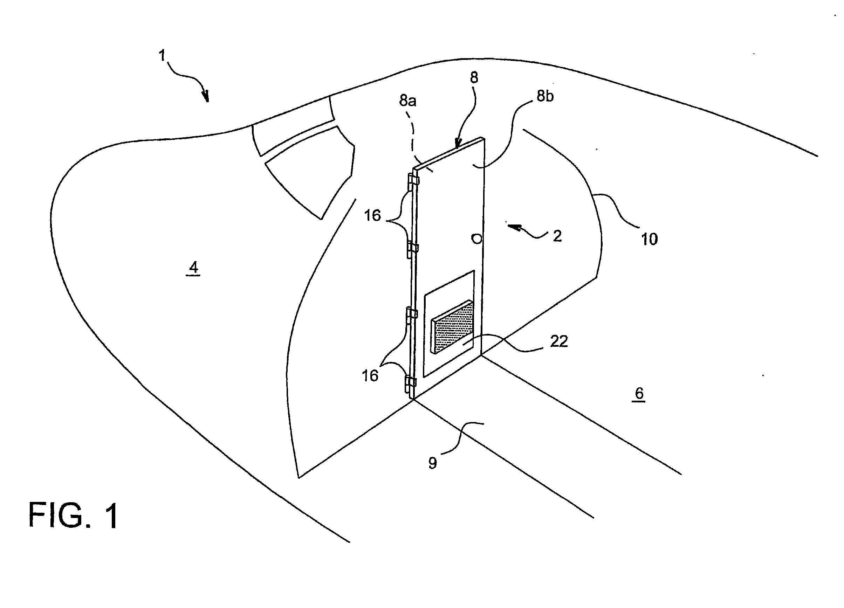

En référence à la figure 1, on peut apercevoir une partie avant 1 d'un aéronef, munie d'un système de porte 2 interposé entre un cockpit 4 et une cabine 6, le système de porte 2 comprenant une porte 8 selon un mode de réalisation préféré de la présente invention. Notons que le système de porte 2 est agencé au niveau d'une cloison 10 séparant le cockpit 4 et la cabine 6, ces deux compartiments étant notamment et respectivement destinés à accueillir le personnel navigant et les passagers de l'aéronef.

La porte 8, de forme sensiblement parallélépipédique et située perpendiculairement à une surface de plancher 9 de l'aéronef, dispose d'un côté cockpit 8a et d'un côté cabine 8b, respectivement orientés vers le cockpit 4 et vers la cabine 6 de l'aéronef, lorsque la porte 8 occupe une position de fermeture telle que celle représentée sur la figure 1.

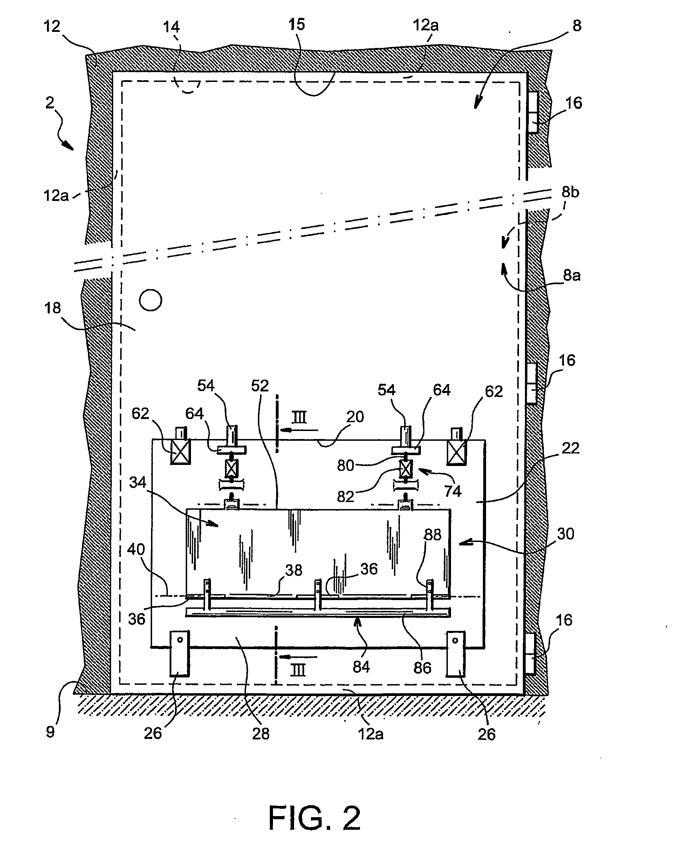

Comme on peut le voir plus précisément sur la figure 2, le système de porte 2 comprend la porte 8 ainsi qu'un cadre de porte 12, ce dernier définissant un passage 14 apte à faire communiquer le cockpit 4 et la cabine 6 de l'aéronef. La porte 8 est montée sur le cadre de porte 12 par l'intermédiaire de charnières 16 alignées selon un axe (non représenté) perpendiculaire à la surface de plancher 9. D'autre part, les charnières 16 sont situées du côté cockpit 8a de la porte 8, de façon à ne pas être accessibles depuis la cabine 6.

Par ailleurs, il est précisé que le cadre de porte 12 dispose d'une surface de butée 12a recouvrant partiellement le-côté cabine 8b de la porte 8 lorsque celle-ci est dans une position de fermeture, c'est-à-dire lorsqu'elle obture le passage 14 et qu'elle repose dans un logement 15 prévu dans le cadre de porte 12, le logement 15 étant de forme sensiblement complémentaire de celle de la porte 8. Comme on peut le voir sur la figure 2, la surface de butée 12a dispose d'une forme de cadre recouvrant une portion périphérique du côté cabine 8b de la porte 8. De cette façon, l'assemblage réalisé ne crée pas d'interstice entre la porte 8 et son cadre de porte associé 12, de sorte que des terroristes situés dans la cabine 6 de l'aéronef ne peuvent tirer de balles entre ces deux éléments.

Ainsi, dans cette configuration spécifique d'assemblage de la porte 8 et du cadre de porte 12, ce dernier autorise uniquement une ouverture de la porte 8 vers le côté cockpit 8a. Bien entendu, la porte 8 selon l'invention pourrait être montée sur son cadre de porte associé 12 de toute autre manière, sans sortir du cadre de l'invention.

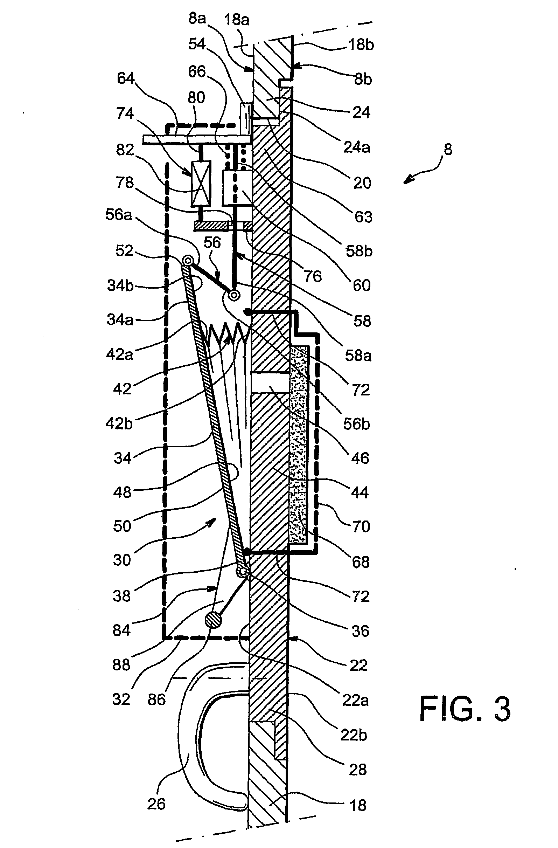

En référence conjointement aux figures 2 et 3, la porte 8 comprend un corps principal de porte 18 muni d'au moins un passage traversant 20 apte à faire communiquer le cockpit 4 et la cabine 6. De plus, la porte 8 comporte un volet 22 apte à obturer le passage 20, toujours de façon à ce qu'il n'existe pas d'interstice entre le volet 22 et un cadre de volet 24, ce dernier étant prévu dans le corps principal de porte 18 et définissant le passage 20.

Pour une meilleure compréhension, il est précisé que le côté cockpit 8a de la porte 8 décrit ci-dessus se compose d'un côté cockpit 18a du corps principal de porte 18 ainsi que d'un côté cockpit 22a du volet 22, les côtés cockpit 18a et 22a étant bien entendu orientés vers le cockpit 4 de l'aéronef. Pareillement, le côté cabine 8b de la porte 8 décrit ci-dessus se compose d'un côté cabine 18b du corps principal de porte 18 ainsi que d'un côté cabine 22b du volet 22, les côtés cabine 18b et 22b étant orientés vers la cabine 6 de l'aéronef.

Le cadre de volet 24 dispose d'une surface de butée 24a recouvrant partiellement le côté cockpit 22a du volet 22, lorsque celui-ci est dans une position d'obturation du passage 20, telle que celle représentée sur les figures 2 et 3. Comme on peut le voir sur la figure 3, la surface de butée 24a dispose d'une forme de cadre recouvrant une portion périphérique du côté cockpit 22a du volet 22. De cette façon, l'assemblage réalisé ne crée pas d'interstice entre le volet 22 et son cadre de volet associé 24, de sorte que des terroristes situés dans la cabine 6 de l'aéronef ne peuvent tirer de balles entre ces deux éléments.

Notons que pour faire face aux tentatives d'intrusion de terroristes à l'intérieur du cockpit 4, le corps principal de porte 18 et le volet 22 sont réalisés dans un matériau anti-balistique tel que la fibre de verre et le Kevlar^{®}. Par ailleurs, toujours dans le but de renforcer la sécurité du personnel navigant situé dans le cockpit 4 et d'interdire l'intrusion de terroristes dans ce même cockpit, il est indiqué que le cadre de porte 12 du système de porte 2 peut également être réalisé dans ce même type de matériau.

Le volet 22, préférentiellement de forme sensiblement parallélépipédique, est apte à être maintenu de façon verrouillée dans le passage 20, notamment à l'aide de crochets de pivotement 26 solidaires d'une partie inférieure 28 du volet 22. Les crochets de pivotement 26 sont de préférence alignés selon un axe (non représenté) parallèle à la surface de plancher 9, et sont de préférence simplement posés en appui contre le côté cockpit 18a du corps principal de porte 18. Ainsi, lorsque le volet 22 est déverrouillé, les crochets 26 permettent l'ouverture et le pivotement de ce volet 22 vers le côté cabine 8b de la porte 8, c'est-à-dire vers la cabine 6 de l'aéronef. Par ailleurs, comme indiqué ci-dessus, les crochets de pivotement 26 étant de préférence posés en appui contre le côté cockpit 18a du corps principal de porte 18, le volet 22 peut être monté et démonté rapidement sans outillage.

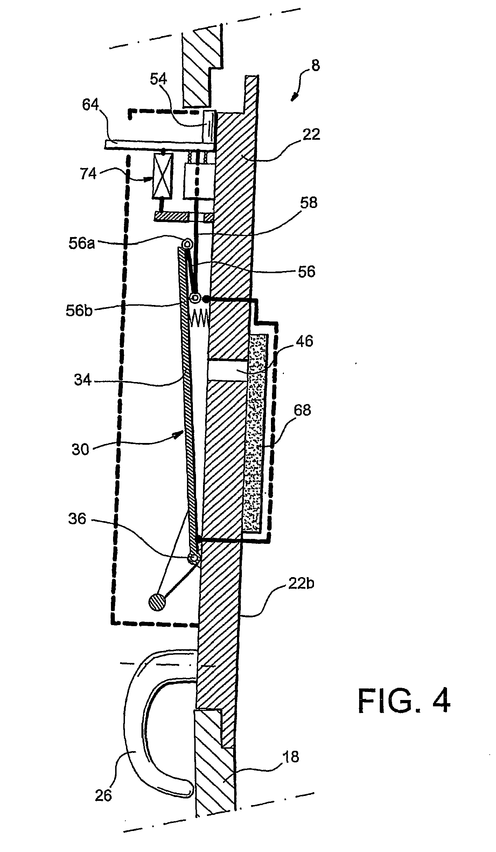

La porte 8 comprend en outre un mécanisme de verrouillage/déverrouillage 30 du volet 22, ce mécanisme 30 étant agencé du côté cockpit 8a de la porte 8 afin de ne pas être accessible depuis la cabine 6 de l'aéronef. Le mécanisme 30, susceptible de déverrouiller automatiquement le volet 22, est de préférence intégralement monté sur le côté cockpit 22a du volet 22, et protégé par un capot de protection 32 (uniquement représentée sur les figures 3 et 4) également assemblée sur le côté cockpit 22a du volet 22. Le capot 32 ne s'oppose pas à l'équilibre des pressions, et prend par exemple la forme d'une grille.

Dans le mode de réalisation préféré décrit, le mécanisme de verrouillage/déverrouillage 30 est du type à fonctionnement pneumatique, et est apte à déverrouiller automatiquement le volet 22 lorsque la différence entre une pression cockpit correspondant à la pression d'air s'appliquant contre le côté cockpit 8a de la porte 8 et une pression cabine correspondant à la pression d'air s'appliquant contre le côté cabine 8b de cette même porte 8, est supérieure à une valeur prédéterminée. En d'autre termes, lorsque la pression régnant à l'intérieur du cockpit 4 dépasse la pression régnant à l'intérieur de la cabine 6 de la valeur prédéterminée, par exemple inférieure à 40 mbar, le volet 22 est automatiquement déverrouillé et apte à être ouvert vers le côté cabine 8b de la porte 8.

Pour ce faire, toujours en référence conjointement aux figures 2 et 3, le mécanisme de verrouillage/déverrouillage 30. comporte un volet secondaire 34, préférentiellement de forme sensiblement parallélépipédique et présentant une première et une seconde surfaces 34a et 34b opposées l'une par rapport à l'autre. Le volet secondaire 34 est assemblé de façon articulée sur le volet 22, par l'intermédiaire de charnières 36 solidaires d'une extrémité inférieure 38 du volet secondaire 34, et disposées selon un axe 40 sensiblement parallèle à la surface de plancher 9 et à l'axe des crochets de pivotement 26 du volet 22.

Plus spécifiquement en référence à la figure 3, le mécanisme 30 comporte une membrane 42 définissant une chambre, cette membrane 42 étant de préférence du type soufflet de forge de petite dimension. De plus, la membrane 42 dispose d'une première extrémité 42a solidaire de la seconde surface 34b du volet secondaire 34, et d'une seconde extrémité 42b solidaire d'une portion 44 du volet 22, munie d'une pluralité d'orifices traversants 46.

De cette façon, une partie 48 de la seconde surface 34b, en contact avec la chambre définie par la membrane 42, est soumise à la pression cabine en raison de la présence des orifices 46 sur la portion 44 du volet 22. Pareillement, une partie 50 de la première surface 34a, située en regard de la partie 48 de la seconde surface 34b, est quant à elle soumise à la pression cockpit. Ainsi, lorsque des pressions différentes s'appliquent contre les parties de surface 48 et 50 disposant sensiblement de la même superficie, la force résultant de cette différence de pression provoque un pivotement du volet secondaire 34 autour de l'axe 40.

Pour que le mouvement décrit par le volet secondaire 34 engendre un déverrouillage du volet 22, le mécanisme de verrouillage/déverrouillage 30 dispose en outre des moyens de transmission de mouvement, raccordés d'une part de façon articulée à une extrémité supérieure 52 du volet secondaire 34, et d'autre part de façon solidaire à au moins un verrou 54. De préférence, le mécanisme 30 comporte deux verrous 54, chacun d'entre eux étant destiné à coopérer avec le côté cockpit 18a du corps principal de porte 18, et plus précisément avec une partie supérieure du cadre de volet 24 orientée vers le cockpit 4 de l'aéronef.

Toujours en référence plus spécifiquement à la figure 3, sur laquelle le volet 22 est représenté dans une position verrouillée d'obturation du passage 20, on voit que pour chaque verrou 54 du mécanisme 30, les moyens de transmission de mouvement comprennent une bielle 56 dont une première extrémité 56a est raccordée de façon articulée à l'extrémité supérieure 52 du volet secondaire 34. De plus, les moyens de transmission de mouvement comportent une tige de transmission coulissante 58 munie d'une première extrémité 58a, raccordée de façon articulée à une seconde extrémité 56b de la bielle 56. La tige de transmission 58 est donc capable de décrire un mouvement de coulissement à travers une douille de guidage 60, montée solidairement sur le côté cockpit 22a du volet 22. Ainsi, le verrou 54 étant raccordé de manière solidaire à une seconde extrémité 58b de la tige de transmission 58, il est donc capable d'être animé du même mouvement de coulissement que celui décrit par la tige 58, ce mouvement étant de préférence effectué selon un axe sensiblement perpendiculaire à la surface de plancher 9 et à l'axe 40 de pivotement du volet secondaire 34. Notons que la douille de guidage 60 est de préférence du type douille de guidage à billes, susceptible de fournir un bon guidage de la tige de transmission 58 et du verrou 54, ne nécessitant donc pas l'adjonction d'une glissière de guidage du verrou dans laquelle les risques de grippage de celui-ci sont souvent très importants.

Le mécanisme de verrouillage/déverrouillage 30 est alors conçu de sorte que lorsque la pression cockpit dépasse la pression cabine de la valeur prédéterminée, correspondant préférentiellement- à une valeur traduisant une dépressurisation significative dans la cabine 6 de l'aéronef, le pivotement du volet secondaire 34 autour de l'axe 40 est suffisamment important pour engendrer un retrait des verrous 54 du cadre de volet 24, suite au coulissement de la tige de transmission 58 en direction de la surface de plancher 9 de l'aéronef. Le volet 22 de la porte 8 est alors déverrouillé.

De manière préférentielle, la valeur prédéterminée de différence de pression d'air est suffisante pour générer, sur un ensemble constitué du volet 22 et du mécanisme de verrouillage/déverrouillage 30, une force conduisant à l'ouverture automatique du volet 22 déverrouillé vers le côté cabine 8b de la porte 8. D'autre part, il est indiqué que cette force doit également être suffisante pour provoquer une ouverture du volet 22, même lorsque ce dernier est couplé à des moyens de retenue 62. En effet, une partie du volet 22, telle qu'une extrémité supérieure 63, peut être munie de moyens de retenue 62 (uniquement représentés sur la figure 2), afin qu'un actionnement du mécanisme 30 réalisé par inadvertance n'engendre pas l'ouverture du volet 22. Les moyens de retenue 62 peuvent être du type poussoirs à bille, destinés à coopérer avec le cadre de volet 24 du corps principal de porte 18.

Par ailleurs, on peut prévoir que la différence de pression ayant conduit au déverrouillage du volet 22 entraîne une libération totale du passage 20 en moins de 200 ms, après quoi un flux d'air pourra aisément traverser ce passage 20 afin d'assurer la ventilation entre le cockpit 4 et la cabine 6 de l'aéronef. Notons à ce titre que la figure 4 montre la porte 8 lorsqu'elle est dans une position de fermeture, et lors du début de l'ouverture du volet 22 vers le côté cabine 8b de la porte 8.

La porte 8 étant susceptible d'être verrouillée dans une position de fermeture pendant toute la durée du vol de l'aéronef, un accident de ce dernier pourrait donc rapidement conduire à un blocage du personnel navigant à l'intérieur du cockpit 4. Ainsi, pour éviter un tel blocage, il est préférentiellement prévu que le volet 22 soit déverrouillé manuellement, depuis le cockpit 4. Pour ce faire, comme on peut le voir sur les figures 2 et 3, pour chaque verrou 54 du mécanisme 30, un levier 64 est interposé solidairement entre la tige de transmission 58 et le verrou 54. De cette façon, en poussant chaque levier 64 vers le bas, à savoir vers la surface de plancher 9, chacun des verrous 54 peut libérer le cadre de volet 24, et le volet 22 peut alors être poussé afin d'être ouvert manuellement vers le côté cabine 8b de la porte 8. A cet égard, il est précisé que les dimensions du passage 20 seront suffisamment importantes pour qu'une personne puisse l'emprunter afin de passer du cockpit 4 à la cabine 6 de l'aéronef, en cas de blocage de la porte 8 dans une position.de fermeture.

Bien entendu, les leviers d'actionnement manuel 64 comprennent une partie s'étendant extérieurement au capot de protection 32, de façon à être facilement accessibles aux personnes situées à l'intérieur du cockpit. 4 de l'aéronef. En outre, un ressort de rappel 66 de chaque verrou 54 est agencé entre le levier 64 et la douille de guidage 60.

Pour disposer d'une porte 8 et d'un système de porte 2 susceptible de faire face aux tentatives d'intrusion de terroristes dans le cockpit 4, la portion 44 du volet 22 munie d'orifices 46 est recouverte par un filtre 68. Le filtre 68 est disposé du côté cabine 22b du volet 22, et a pour principale fonction de masquer l'emplacement de ces orifices 46, de sorte qu'ils ne soient pas visibles par des terroristes se situant dans la cabine 6 de l'aéronef. De plus, le filtre 68 est maintenu contre le côté cabine 22b à l'aide d'une grille de protection anti-balistique 70 apte à laisser passer l'air, assemblée sur le volet 22 par l'intermédiaire d'une pluralité de goujons 72, traversant ce même volet 22 et étant uniquement démontables depuis le côté cockpit. 22a du volet 22.

Pour éviter que des terroristes ne provoquent le déverrouillage du volet 22 en tirant des balles ou en projetant une masse contre ce volet 22, il est tout d'abord prévu que pour chaque verrou 54, les moyens de transmission de mouvement comportent des moyens anti-accélération 74. Les moyens anti-accélération 74 sont disposés sensiblement parallèlement à la tige de transmission 58, et sont solidaires d'une part du levier 64, et d'autre part d'un support 76 monté solidairement sur le côté cockpit 22a du volet 22. Il est noté que sans sortir du cadre de l'invention, au lieu d'être solidaires du levier 64, les moyens anti-accélération 74 pourraient être directement solidaires de la tige de transmission 58.

De plus, comme on peut le voir sur la figure 3, le support 76 est muni d'un orifice de passage 78 traversé par la tige de transmission 58, afin que celle-ci soit en mesure de décrire son mouvement de coulissement par rapport au volet 22. Les moyens anti-accélération 74, comprenant par exemple un axe 80 apte à coulisser et à être bloqué dans un corps de blocage 82, sont alors conçus de manière à ce que l'axe 80 soit stoppé dans son corps de blocage associé 82, lorsque la vitesse de l'axe 80 par rapport au corps 82 dépasse une valeur prédéterminée de vitesse. La vitesse-de l'axe 80 par rapport à son corps de blocage associé 82 étant identique à la vitesse de la tige de transmission 58 par rapport au volet 22, on en déduit que les moyens anti-accélération 74 sont aptes à stopper le mouvement de la tige de transmission 58, lorsque celle-ci est animée d'un mouvement de coulissement d'une vitesse supérieure à la valeur prédéterminée de vitesse.

Ainsi, lorsque le mécanisme de verrouillage/déverrouillage 30 est actionné suite à un mouvement rapide du volet secondaire 34 résultant de l'impact de balles ou d'une masse contre la porte 8, le mouvement des éléments constitutifs de ce mécanisme 30 est automatiquement stoppé, de sorte que les verrous 54 ne libèrent pas le cadre de volet 24.

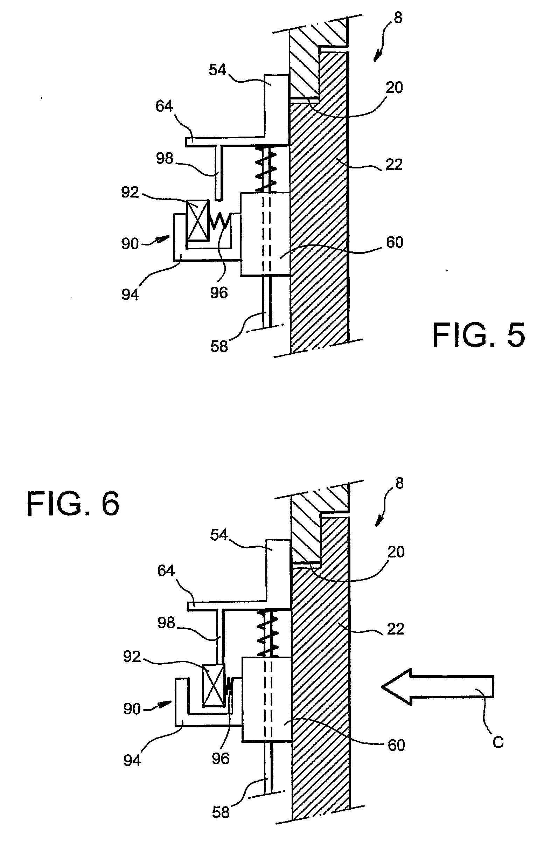

Selon un autre mode de réalisation préféré de l'invention et en référence conjointement aux figures 5 et 6, toujours afin d'éviter que des terroristes ne provoquent le déverrouillage du volet 22 en tirant des balles ou en projetant une masse contre la porte 8, il est tout d'abord prévu que pour chaque verrou 54, les moyens de transmission de mouvement comportent des moyens de butée 90. Ces moyens de butée 90 comprennent tout d'abord une masse inertielle 92, apte à coulisser selon un axe sensiblement perpendiculaire au plan de la porte 8, à l'intérieur d'un support 94 préférentiellement solidaire de la douille de guidage 60 comme représenté, ou directement solidaire du volet 22.

Lorsque le volet 22 est verrouillé dans une position d'obturation du passage 20 tel que représentée sur la figure 5, un ressort 96 solidaire du support 94 maintient la masse inertielle 92 dans une position de retrait, dans laquelle cette masse 92 est plaquée contre une surface intérieure du support 94, du côté cockpit de ce support. Notons que le support 94 est conçu de manière à ce que dans cette position de retrait, la masse inertielle 92 est suffisamment éloignée du volet 22 pour qu'un organe d'arrêt 98, solidaire du levier 64 et donc du verrou 54, n'entre pas en contact avec la masse inertielle 92 lors d'un mouvement de ce verrou 54. En d'autres termes, la masse inertielle 92 occupant sa position de retrait rend les moyens de butée 90 inopérants, de sorte que les moyens de transmission de mouvement sont aptes à fonctionner de la même façon que si ces moyens de butée 90 n'existaient pas.

En revanche, lorsqu'un choc d'une intensité prédéterminée survient sur la porte 8 comme cela est représenté schématiquement par la flèche C de la figure 6, la masse inertielle 92 coulisse alors automatiquement en direction du volet 22 vers le côté cabine du support 94, sous l'effet d'une accélération provoquée par le choc, afin d'occuper une position du butée dans laquelle la masse 92 constitue une butée pour l'organe d'arrêt 98. Il est précisé que cet organe d'arrêt 98 prend par exemple la forme d'un doigt s'étendant depuis le levier 64, en direction de la surface de plancher 9 de l'aéronef.

De cette façon, la partie inférieure de l'organe d'arrêt 98 étant en contact avec la masse inertielle 92, cela provoque le blocage de l'ensemble des moyens de transmission de mouvement et donc celui du verrou 54, de sorte que le volet 22 ne peut être déverrouillé.

Bien entendu, les moyens de butée 90 sont conçus de manière à ce que la masse inertielle 92 occupe sa position de butée uniquement lorsque le choc survenant sur la porte 8 est d'une intensité supérieure ou égale à une intensité prédéterminée, celle-ci pouvant être choisie de manière à traduire l'impact de balles ou d'une masse.

Par ailleurs, afin de diminuer encore davantage les risques de déverrouillage du volet 22 suite à l'impact de balles ou d'une masse contre la porte 8, celle-ci peut intégrer un système d'équilibrage 84 du volet secondaire 34, visible sur les figures 2 et 3. Le système d'équilibrage. 84 est conçu afin d'interdire ou de limiter fortement le mouvement du volet secondaire 34, suite à un choc survenant sur la porte 8, et plus spécifiquement sur le volet 22. Le système d'équilibrage 84 comprend alors une masse d'équilibrage 86 prenant de préférence la forme d'une barre s'étendant parallèlement à l'axe 40 de pivotement du volet 22, ainsi que des bras 88 établissant le raccordement entre la masse d'équilibrage 86 et- l'extrémité inférieure 38 du volet secondaire 34.

Le dispositif d'équilibrage 84 est donc conçu de manière à pouvoir équilibrer le moment moteur imprimé par le volet secondaire 34, sous l'accélération reçue par le choc produit sur la porte 8.

Bien entendu, diverses modifications peuvent être apportées par l'homme du métier à la porte 8 et au système de porte 2 qui viennent d'être décrits, uniquement à titre d'exemples non limitatifs.

## Revendications

1. Porte (8) destinée à être interposée entre un cockpit (4) et une cabine (6) d'un aéronef, ladite porte (8) disposant d'un côté cockpit (8a) et d'un côté cabine (8b), ladite porte comportant au moins un volet (22) apte d'une part à obturer un passage (20) prévu à travers ladite porte (8) et d'autre part à être ouvert vers le côté cabine (8b) de cette porte, la porte (8) comprenant également un mécanisme de verrouillage/déverrouillage (30) du volet (22) agencé du côté cockpit (8a) de la porte (8) et susceptible de déverrouiller automatiquement le volet (22) lorsque la différence entre une pression cockpit et une pression cabine, correspondant respectivement aux pressions d'air s'appliquant contre le côté cockpit (8a) et contre le côté cabine (8b) de ladite porte (8), est supérieure à une valeur prédéterminée, **caractérisée en ce que** le mécanisme de verrouillage/déverrouillage (30) est monté sur le volet (22) de la porte (8), et qu'il comporte :
- un volet secondaire (34) comportant une première (34a) et une seconde surfaces (34b), ladite première surface (34a) étant soumise à la pression cockpit,
- une membrane (42) définissant une chambre et étant munie d'une première (42a) et d'une seconde extrémités (42b), la première extrémité (42a) étant solidaire de la seconde surface (34b) du volet secondaire (34), et la seconde extrémité (42b) étant solidaire d'une portion (44) du volet (22) munie d'au moins un orifice traversant (46), de sorte qu'au moins une partie de la seconde surface (34b) du volet secondaire (34) soit soumise à la pression cabine, et
- des moyens de transmission de mouvement raccordés d'une part au volet secondaire (34) susceptible d'être mis en mouvement lorsque la pression cockpit et la pression cabine diffèrent, et d'autre part à au moins un verrou (54) destiné à coopérer avec un cadre de volet (24) prévu sur la porte (8) et définissant ledit passage (20).

2. Porte (8) selon la revendication 1, **caractérisée en ce que** ladite valeur prédéterminée de différence de pression d'air est telle qu'elle est apte à générer sur le volet (22) une force suffisante pour provoquer une ouverture automatique de ce volet (22) déverrouillé, vers le côté cabine (8b) de ladite porte (8).

3. Porte (8) selon la revendication 1 ou 2, **caractérisée en ce que** le volet secondaire (34) comprend une extrémité supérieure (52) et une extrémité inférieure (38), l'extrémité inférieure (38) étant raccordée de façon articulée sur le volet (22), et l'extrémité supérieure (52) étant raccordée de façon articulée aux moyens de transmission de mouvement.

4. Porte (8) selon la revendication 3, **caractérisée en ce que** pour chaque verrou (54) du mécanisme de verrouillage/déverrouillage (30), les moyens de transmission de mouvement comportent :
- une bielle (56) disposant d'une première (56a) et d'une seconde extrémités (56b), la première extrémité (56a) étant raccordée de façon articulée à l'extrémité supérieure (52) du volet secondaire (22), et
- une tige de transmission coulissante (58) disposant d'une première (58a) et d'une seconde extrémités (58b), la première extrémité (58a) étant raccordée de façon articulée à la seconde extrémité (56b) de ladite bielle (56), et la seconde extrémité (58b) étant raccordée de manière solidaire audit verrou (54).

5. Porte (8) selon la revendication 4, **caractérisée en ce que** pour chaque verrou (54) du mécanisme de verrouillage/déverrouillage (30), les moyens de transmission de mouvement comportent également une douille de guidage (60) solidaire du volet (22) de ladite porte (8), et à l'intérieur de laquelle la tige de transmission (58) est apte à coulisser.

6. Porte (8) selon la revendication 5, **caractérisée en ce que** chaque verrou (54) du mécanisme de verrouillage/déverrouillage (30) est solidaire d'un levier (64) susceptible d'être actionné afin de déverrouiller manuellement ledit volet (22), un ressort de rappel (66) du verrou (54) étant agencé entre ledit levier (64) et la douille de guidage (60) des moyens de transmission de mouvement.

7. Porte (8) selon l'une quelconque des revendications précédentes, **caractérisée en ce que** pour chaque verrou (54) du mécanisme de verrouillage/déverrouillage (30), les moyens de transmission de mouvement comportent également des moyens anti-accélération (74) destinés à stopper le mouvement de la tige de transmission (58) lorsque celle-ci est animée d'un mouvement d'une vitesse supérieure à une vitesse prédéterminée.

8. Porte (8) selon l'une quelconque des revendications 1 à 6, **caractérisée en ce que** pour chaque verrou (54) du mécanisme de verrouillage/déverrouillage (30), les moyens de transmission de mouvement comportent également des moyens de butée (90) munis d'une masse inertielle (92) apte à se déplacer automatiquement d'une position de retrait à une position de butée, suite à un choc survenant sur la porte (8) d'intensité supérieure ou égale à une intensité prédéterminée, afin de constituer une butée pour un organe d'arrêt (98) solidaire dudit verrou (54).

9. Porte (8) selon l'une quelconque des revendications précédentes, **caractérisée en ce que** le mécanisme de verrouillage/déverrouillage (30) comporte en outre un système d'équilibrage (84) du volet secondaire (34), ledit système d'équilibrage (84) étant conçu afin d'interdire, suite à un choc survenant sur ladite porte (8), tout mouvement du volet secondaire (34) susceptible de provoquer le déverrouillage de ce volet (22).

10. Porte (8) selon l'une quelconque des revendications précédentes, **caractérisée en ce que** le mécanisme de verrouillage/déverrouillage (30) est protégé par un capot de protection (32), montée du côté cockpit (8a) sur le volet (22) de ladite porte (8).

11. Porte (8) selon l'une quelconque des revendications précédentes, **caractérisée en ce que** ladite portion (44) du volet (22) munie d'au moins un orifice traversant (46) est recouverte d'un filtre (68) disposé du côté cabine (8b) de ladite porte (8) et masquant l'emplacement de chaque orifice (46), ledit filtre (68) étant maintenu contre le volet (22) par une grille de protection anti-balistique (70) assemblée sur ledit volet (22).

12. Porte (8) selon la revendication 11, **caractérisée en ce que** la grille de protection anti-balistique (70) est assemblée sur le volet (22) à l'aide d'une pluralité de goujons (72) traversant ledit volet (22), et uniquement démontables depuis le côté cockpit (8a) de ladite porte (8).

13. Porte (8) selon l'une quelconque des revendications précédentes, **caractérisée en ce que** le volet (22) comporte une partie inférieure (28) munie de crochets de pivotement (26) destinés d'une part à maintenir le volet (22) dans une position d'obturation du passage (20) lorsqu'il est verrouillé, et d'autre part à autoriser un pivotement dudit volet (22) vers le côté cabine (8b) lorsqu'il est déverrouillé.

14. Porte (8) selon l'une quelconque des revendications précédentes, **caractérisée en ce que** le volet (22) comporte une partie supérieure (63) munie de moyens de retenue (62) dudit volet (22) dans le passage (20).

15. Porte (8) selon la revendication 14, **caractérisée en ce que** les moyens de retenu (62) sont constitués par au moins un poussoir à bille apte à coopérer avec le cadre de volet (24) prévu dans ladite porte (8).

16. Porte (8) selon l'une quelconque des revendications précédentes, **caractérisée en ce qu'**elle comprend un corps principal de porte (18) ainsi que le volet (22) apte à être monté sur le corps principal de porte (18) afin d'obturer ledit passage (20), le volet (22) muni du mécanisme de verrouillage/déverrouillage (30) étant intégralement amovible du corps principal de porte (18).

17. Porte (8) selon la revendication 16, **caractérisée en ce que** le corps principal de porte (18) et le volet (22) sont réalisés dans un matériau anti-balistique.

18. Porte (8) selon l'une quelconque des revendications précédentes, **caractérisée en ce que** le passage (20) est de dimension suffisante pour autoriser une évacuation du personnel par ledit passage (20).

19. Système de porte (2) destiné à être interposé entre un cockpit (4) et une cabine (6) d'un aéronef, ledit système (2) comportant un cadre de porte (12) ainsi qu'une porte (8) disposant d'un côté cockpit (8a) et d'un côté cabine (8b), le cadre de porte (12) étant apte à recouvrir partiellement le côté cabine (8b) de ladite porte (8) et autorisant uniquement une ouverture de cette porte (8) vers le côté cockpit (8a), **caractérisé en ce que** ladite porte (8) est une porte selon l'une quelconque des revendications précédentes.

## Claims

1. Door (8) designed to be inserted between a cockpit (4) and a cabin (6) of an aircraft, said door (8) having a cockpit side (8a) and a cabin side (8b), **characterized in that** it comprises at least one trapdoor (22) capable of firstly closing off a passageway (20) provided through said door (8) and secondly of opening towards the cabin side (8b) of this door, the door (8) also comprising a mechanism (30) for locking/unlocking of the trapdoor (22) arranged on the cockpit side (8a) of the door (8) and capable of automatically unlocking the trapdoor (22) when the difference between a cockpit pressure corresponding respectively to the air pressure applied against the cockpit side (8a) of said door (8) and a cabin pressure corresponding to the air pressure applied against the cabin side (8b) of said door (8), is greater than a predetermined value, **characterized in that** the locking/unlocking mechanism (30) is mounted on the trapdoor (22) of the door (8),
- a secondary trapdoor (34) comprising a first surface (34a) and a second surface (34b), the first surface (34a) being subject to the cockpit pressure,
- a membrane (42) defining a chamber and being provided with a first end (42a) and a second end (42b), the first end (42a) being fixed to the second surface (34b) of the secondary trapdoor (34), and the second end (42b) being fixed to a portion (44) of the trapdoor (22) provided with at least one through orifice (46), such that at least a part of the second surface (34b) of the secondary trapdoor (34) is subjected to cabin pressure, and
- means of transmission of movement connected firstly to the secondary trapdoor (34) that can be moved when the cockpit pressure and the cabin pressure are different, and secondly to at least one bolt (54) that will cooperate with a trapdoor frame (24) provided on the door (8) and defining said passageway (20).

2. Door (8) according to claim 1, **characterized in that** said predetermined value of the air pressure difference is such that it can generate a sufficient force on the trapdoor (22) to cause automatic opening of the unlocked trapdoor (22) towards the cabin side (8b) of said door (8).

3. Door (8) according to claim 1 or 2, **characterized in that** the secondary trapdoor (34) comprises an upper end (52) and a lower end (38), the lower end (38) being connected hinged onto the trapdoor (22) and the upper end (52) being connected hinged to the movement transmission means.

4. Door (8) according to claim 3, **characterized in that** the movement transmission means for each bolt (54) in the locking/unlocking mechanism (30) includes:
- a connecting rod (56), provided with a first end (56a) and a second end (56b), the first end (56a) being connected hinged to the upper end (52) of the secondary trapdoor (22), and
- a sliding transmission rod (58) provided with a first end (58a) and a second end (58b), the first end (58a) being connected hinged to the second end (56b) of said connecting rod (56), and the second end (58b) being connected fixed to said bolt (54).

5. Door (8) according to claim 4, **characterized in that** for each bolt (54) in the locking/unlocking mechanism (30), the movement transmission means also comprise a guide bushing (60) fixed to the trapdoor (22) in said door (8), and inside which the transmission rod (58) is free to slide.

6. Door (8) according to claim 5, **characterized in that** each bolt (54) in the locking/unlocking mechanism (30) is fixed to a lever (64) that can be actuated in order to release said trapdoor (22) manually, a return spring (66) of the bolt (54) being arranged between said lever (64) and the guide bushing (60) of the movement transmission means.

7. Door (8) according to any one of the preceding claims, **characterized in that** the movement transmission means for each bolt (54) in the locking/unlocking mechanism (30) also include anti-acceleration means (74) designed to stop the movement of the transmission rod (58) when the transmission rod is moving at a speed greater than a predetermined speed.

8. Door (8) according to any one of claims 1 to 6, **characterized in that** for each bolt (54) in the locking/unlocking mechanism (30), the movement transmission means also comprise stop means (90) provided with an inertial mass (92) that can move automatically from a withdrawn position to a stop position, following a shock that occurs on the door (8) with an intensity, so as to form a stop for a stop device (98) fixed to said bolt (54).

9. Door (8) according to any one of the preceding claims, **characterized in that** the locking/unlocking mechanism (30) also includes a balancing system (84) for the secondary trapdoor (34), said balancing system (84) being designed to prevent any movement of the secondary trapdoor (34) that could cause unlocking of this trapdoor (22) following a shock applied on said door (8).

10. Door (8) according to any one of the preceding claims, **characterized in that** the locking/unlocking mechanism (30) is protected by a protection cover (320 installed on the cockpit side (8a) on the trapdoor (22) in said door (8).

11. Door (8) according to any one of the preceding claims, **characterized in that** said portion (44) of the trapdoor (22) provided with at least one through orifice (46) is covered by a filter (68) arranged on the cabin side (8b) of said door (8) and concealing the location of each orifice (46), said filter (68) being held in contact with the trapdoor (22) by a bullet-proof protection grill (70) assembled on said trapdoor (22).

12. Door (8) according to claim 11, **characterized in that** the bullet-proof protection grill (70) is assembled on the trapdoor (22) using a plurality of studs (72) passing through said trapdoor (22), and that can only be disassembled from the cockpit side (8a) of said door (8).

13. Door (8) according to any one of the preceding claims, **characterized in that** the trapdoor (22) comprises a lower part (28) provided with pivot hooks (26) designed firstly to hold the trapdoor (22) in a passageway (20) closing position when it is locked, and secondly to enable pivoting of said trapdoor (22) towards the cabin side (8b) when it is unlocked.

14. Door (8) according to any one of the preceding claims, **characterized in that** the trapdoor (22) comprises an upper part (63) provided with means (62) of retaining said trapdoor (22) in the passageway (20).

15. Door (8) according to claim 14, **characterized in that** the retaining means (62) are composed of at least one ball pusher capable of cooperating with the trapdoor frame (24) fixed in said door (8).

16. Door (8) according to any one of the preceding claims, **characterized in that** it comprises a main door body (18) and the trapdoor (22) that can be mounted on the main door body (18) in order to close off said passageway (20), the trapdoor (22) fitted with the locking/unlocking mechanism (30) being fully removable from the main door body (18).

17. Door (8) according to claim 16, **characterized in that** the main door body (18) and the trapdoor (22) are made from a bullet-proof material.

18. Door (8) according to any one of the preceding claims, **characterized in that** the passageway (20) is sufficiently large to enable evacuation of personnel through said passageway (20).

19. Door system (2) designed to be inserted between a cockpit (40 and a cabin (6) of an aircraft, said system (2) comprising a door frame (12) and a door (8) with a cockpit side (8a) and a cabin side (8b), the door frame (12) being capable of partially covering the cabin side (8b) of said door (8) and preventing this door from being opened in any direction except towards the cockpit side (8a), **characterized in that** said door (8) is a door according to any one of the preceding claims.

## Patentansprüche

1. Tür (8), die dazu bestimmt ist, zwischen ein Cockpit (4) und eine Kabine (6) eines Luftfahrzeugs eingefügt zu werden, wobei die Tür (8) über eine Cockpitseite (8a) und eine Kabinenseite (8b) verfügt, und die Tür mindestens einen Türflügel (22) umfasst, der einerseits einen durch die Tür (8) hindurch vorgesehenen Durchgang (20) verschließen kann und andererseits zur Kabinenseite (8b) dieser Tür hin geöffnet werden kann, wobei die Tür (8) auch einen Verriegelungs-/Entriegelungsmechanismus (30) des auf der Cockpitseite (8a) der Tür (8) angeordneten Türflügels (22) aufweist, der den Türflügel (22) automatisch entriegeln kann, wenn der Unterschied zwischen einem Cockpitdruck und einem Kabinendruck, die jeweils den an der Cockpitseite (8a) und an der Kabinenseite (8b) der Tür (8) anliegenden Luftdrücken entspricht, über einem vorbestimmten Wert liegt,
**dadurch gekennzeichnet, dass** der Verriegelungs-/Entriegelungsmechanismus (30) an dem Türflügel (22) der Tür (8) angebracht ist und dass er umfasst:
- einen Sekundärflügel (34) mit einer ersten (34a) und einer zweiten Oberfläche (34b), wobei die erste Oberfläche (34a) dem Cockpitdruck ausgesetzt ist,
- eine Membran (42), die eine Kammer festlegt und mit einem ersten (42a) und einem zweiten Ende (42b) versehen ist, wobei das erste Ende (42a) mit der zweiten Oberfläche (34b) des Sekundärflügels (34) einstückig bzw. fest verbunden ist, und das zweite Ende (42b) mit einem Abschnitt (44) des mit mindestens einem Durchgangsloch (46) versehen Türflügels (22) einstückig bzw. fest verbunden ist, so dass mindestens ein Teil der zweiten Oberfläche (34b) des Sekundärflügels (34) dem Kabinendruck ausgesetzt ist, und
- Bewegungsübertragungsmittel, die einerseits mit dem Sekundärflügel (34) verbunden sind, der in Bewegung gesetzt werden kann, wenn der Cockpitdruck und der Kabinendruck sich unterscheiden, und andererseits mit mindestens einem Verriegelungselement (54), das zum Zusammenwirken mit einem an der Tür (8) vorgesehenen und den Durchgang (20) festlegenden Türflügelrahmen (24) bestimmt ist.

2. Tür (8) nach Anspruch 1, **dadurch gekennzeichnet, dass** der vorbestimmte Wert des Luftdruckunterschieds derart ist, dass er eine ausreichende Kraft auf den Türflügel (22) ausüben kann, um ein automatisches Öffnen dieses entriegelten Türflügels (22) zu der Kabinenseite (8b) der Tür (8) hin hervorzurufen.

3. Tür (8) nach Anspruch 1 oder 2, **dadurch gekennzeichnet, dass** der Sekundärflügel (34) ein oberes Ende (52) und ein unteres Ende (38) umfasst, wobei das untere Ende (38) auf gelenkige Weise mit dem Türflügel (22) verbunden ist, und das obere Ende (52) auf gelenkige Weise mit den Bewegungsübertragungsmitteln verbunden ist.

4. Tür (8) nach Anspruch 3, **dadurch gekennzeichnet, dass** für jedes Verriegelungselement (54) des Verriegelungs-/Entriegelungsmechanismus (30) die Bewegungsübertragungsmittel umfassen:
- eine Kurbel (56) mit einem ersten (56a) und einem zweiten Ende (56b), wobei das erste Ende (56a) auf gelenkige Weise mit dem oberen Ende (52) des Sekundärflügels (22) verbunden ist, und
- eine Übertragungs-Gleitstange (58) mit einem ersten (58a) und einem zweiten Ende (58b), wobei das erste Ende (58a) auf gelenkige Weise mit dem zweiten Ende (56b) der Kurbel (56) verbunden ist, und das zweite Ende (58b) mit dem Verriegelungselement (54) fest verbunden ist.

5. Tür (8) nach Anspruch 4, **dadurch gekennzeichnet, dass** für jedes Verriegelungselement (54) des Verriegelungs-/Entriegelungsmechanismus (30) die Bewegungsübertragungsmittel auch eine Führungshülse (60) umfassen, die mit dem Türflügel (22) der Tür (8) fest verbunden ist und in deren Innerem die Übertragungsstange (58) gleiten kann.

6. Tür (8) nach Anspruch 5, **dadurch gekennzeichnet, dass** jedes Verriegelungselement (54) des Verriegelungs-/Entriegelungsmechanismus (30) mit einem Hebel (64) fest verbunden ist, der betätigt werden kann, um den Türflügel (22) manuell zu entriegeln, wobei eine Rückholfeder (66) des Verriegelungselements (54) zwischen dem Hebel (64) und der Führungshülse (60) der Bewegungsübertragungsmittel angeordnet ist.

7. Tür (8) nach einem der vorangehenden Ansprüche, **dadurch gekennzeichnet, dass** für jedes Verriegelungselement (54) des Verriegelungs-/Entriegelungsmechanismus (30) die Bewegungsübertragungsmittel auch Anti-Beschleunigungsmittel (74) umfassen, die dazu bestimmt sind, die Bewegung der Übertragungsstange (58) anzuhalten, wenn diese eine Bewegung mit einer Geschwindigkeit über einer vorbestimmten Geschwindigkeit ausführt.

8. Tür (8) nach einem der Ansprüche 1 bis 6, **dadurch gekennzeichnet, dass** für jedes Verriegelungselement (54) des Verriegelungs-/Entriegelungsmechanismus (30) die Bewegungsübertragungsmittel auch Anschlagmittel (90) aufweisen, die mit einer inerten Masse (92) versehen sind, welche sich automatisch von einer Rückzugsposition zu einer Anschlagposition infolge eines auf die Tür (8) einwirkenden Stoßes bewegen kann, dessen Intensität größer oder gleich einer vorbestimmten Intensität ist, um einen Anschlag für ein mit dem Verriegelungselement (54) fest verbundenes Arretierelement (98) zu bilden.

9. Tür (8) nach einem der vorangehenden Ansprüche, **dadurch gekennzeichnet, dass** der Verriegelungs-/ Entriegelungsmechanismus (30) außerdem ein Kraftausgleichssystem (84) des Sekundärflügels (34) aufweist, wobei das Kraftausgleichssystem (84) so ausgestattet ist, dass es bei einem auf die Tür (8) einwirkenden Stoß jegliche Bewegung des Sekundärflügels (34), welche die Entriegelung dieses Flügels (22) auslösen könnte, unterbindet.

10. Tür (8) nach einem der vorangehenden Ansprüche, **dadurch gekennzeichnet, dass** der Verriegelungs-/Entriegelungsmechanismus (30) von einer Schutzhaube (32) geschützt ist, die auf der Cockpitseite (8a) an dem Türflügel (22) der Tür (8) angebracht ist.

11. Tür (8) nach einem der vorangehenden Ansprüche, **dadurch gekennzeichnet, dass** der Abschnitt (44) des Türflügels (22), der mit mindestens einem Durchgangsloch (46) versehen ist, von einem Filter (68) bedeckt ist, das auf der Kabinenseite (8b) der Tür (8) angeordnet ist und die Stelle jedes Lochs (46) verdeckt, wobei das Filter (68) an den Türflügel (22) durch ein an dem Türflügel (22) angebrachtes, kugelsicheres Schutzgitter (70) gehalten wird.

12. Tür (8) nach Anspruch 11, **dadurch gekennzeichnet, dass** das kugelsichere Schutzgitter (70) an den Türflügel (22) mittels mehrerer den Türflügel (22) durchsetzender Splinte (72) montiert ist, die nur von der Cockpitseite (8a) der Tür (8) her demontierbar sind.

13. Tür (8) nach einem der vorangehenden Ansprüche, **dadurch gekennzeichnet, dass** der Türflügel (22) einen unteren Abschnitt (28) umfasst, der mit Schwenkhaken (26) versehen ist, die dazu bestimmt sind, einerseits den Türflügel (22) in einer Verschließposition des Durchgangs (20) zu halten, wenn er verriegelt ist, und andererseits ein Schwenken des Türflügels (22) zur Kabinenseite (8b) hin zuzulassen, wenn er entriegelt ist bzw. wird.

14. Tür (8) nach einem der vorangehenden Ansprüche, **dadurch gekennzeichnet, dass** der Türflügel (22) einen oberen Abschnitt (63) umfasst, der mit Rückhaltemittel (62) des Türflügels (22) in dem Durchgang (20) versehen ist.

15. Tür (8) nach Anspruch 14, **dadurch gekennzeichnet, dass** die Rückhaltemittel (62) durch mindestens einen Kugelstößel gebildet sind, der mit dem an der Tür (8) vorgesehenen Türflügelrahmen (24) zusammenwirken kann.

16. Tür (8) nach einem der vorangehenden Ansprüche, **dadurch gekennzeichnet, dass** sie einen Türhauptkörper (18) sowie den Türflügel (22) umfasst, der an dem Türhauptkörper (18) angebracht werden kann, um den Durchgang (20) zu verschließen, wobei der mit dem Verriegelungs-/Entriegelungsmechanismus (30) versehene Türflügel (22) vollständig von dem Türhauptkörper (18) abnehmbar ist.

17. Tür (8) nach Anspruch 16, **dadurch gekennzeichnet, dass** der Türhauptkörper (18) und der Türflügel (22) aus einem kugelsicheren Material hergestellt sind.

18. Tür (8) nach einem der vorangehenden Ansprüche, **dadurch gekennzeichnet, dass** der Durchgang (20) eine ausreichende Dimension aufweist, um eine Evakuierung des Personals durch den Durchgang (20) zuzulassen.

19. Türsystem (2), das dazu bestimmt ist, zwischen einem Cockpit (4) und einer Kabine (6) eines Luftfahrzeugs eingefügt zu werden, wobei das System (2) einen Türrahmen (12) sowie eine Tür (8) umfasst, die über eine Cockpitseite (8a) und eine Kabinenseite (8b) verfügt, wobei der Türrahmen (12) teilweise die Kabinenseite (8b) der Tür (8) bedecken kann und ein Öffnen dieser Tür (8) nur zur Cockpitseite (8a) hin zulässt, **dadurch gekennzeichnet, dass** die Tür (8) eine Tür gemäß einem der vorangehenden Ansprüche ist.
